# FASCICULE DE BREVET EUROPEEN

(11) **EP 0 490 719 B1**
(45) Date de publication et mention de la délivrance du brevet: **02.11.1994**
(21) Numéro de dépôt: 91403112.5
(22) Date de dépôt: 19.11.1991
(51) Int. Cl.: F16F 13/00

(54) **Dispositif hydroélastique de suspension**
Hydroelastische Aufhängungsvorrichtung
Hydrolastic suspension device

(30) Priorité: 10.12.1990 FR 9015437
(43) Date de publication de la demande: 17.06.1992
(73) Titulaire: AUTOMOBILES PEUGEOT, 75116 Paris (FR); AUTOMOBILES CITROEN, 92200 Neuilly-sur-Seine (FR)
(72) Inventeur: Froumajou, Armand, F-95110 Sannois (FR)
(74) Mandataire: Obolensky, Michel

(56) Documents cités:
- EP-A- 0 163 162
- GB-A- 2 164 416
- PATENT ABSTRACTS OF JAPAN vol. 13, no. 420 (M-872)(3768) 19 Septembre 1989
- PATENT ABSTRACTS OF JAPAN vol. 8, no. 274 (M-345)(1711) 14 Décembre 1984
- PATENT ABSTRACTS OF JAPAN vol. 11, no. 360 (M-645)(2807) 25 Novembre 1987

## Description

La présente invention concerne un dispositif hydroélastique destiné à être interposé entre deux ensembles à suspendre l'un par rapport à l'autre.

L'invention concerne notamment un dispositif de suspension d'un moteur dans un véhicule automobile.

Un tel dispositif est notamment applicable à la suspension d'un groupe motopropulseur comportant certains défauts d'équilibrage dûs aux forces d'inertie tels que les moteurs à combustion interne à quatre cylindres en ligne.

Un des buts de l'invention est de piloter le dispositif hydroélastique du groupe motopropulseur en synchronisme avec des harmoniques de la vibration du groupe motopropulseur. Afin que l'effet recherché soit obtenu, il est nécessaire que le dispositif hydroélastique de suspension soit piloté de façon permanente et en synchronisme absolu avec la vibration du moteur. Par exemple, pour la suspension d'un moteur à quatre cylindres en ligne, il est nécessaire de piloter le support deux fois par tour de rotation du moteur.

On connaît du document FR-A-2.364.373 un support hydroélastique du type comprenant deux armatures reliées respectivement aux deux ensembles à suspendre, ces deux armatures étant réunies par une masse de matériau élastomère, le support comportant au moins une chambre de travail, une chambre d'expansion remplies d'un liquide et reliées entre elles par un passage de communication. Dans ce support, la chambre de travail est délimitée en partie par une cloison mobile en matériau élastique qui délimite une chambre supplémentaire de commande remplie d'un fluide hydraulique de commande dont la pression varie directement en fonction du régime du moteur.

Le document FR-A-2.570.154 décrit un autre type de dispositif de suspension hydroélastique dans laquelle le pilotage est effectué en appliquant à une paroi déformable élastiquement des sollicitations au moyen d'un organe de commande dont les déplacements sont commandés à l'aide d'un actionneur électromagnétique.

L'abrégé de JP-A-62 137 437 décrit une tige de piston coulissant dans un corps reliée à une armature d'un dispositif d'amortissement de vibration afin de communiquer des mouvements rectilignes alternatifs à un élément de ce dispositif.

La présente invention a pour but de proposer un dispositif hydroélastique de suspension, à pilotage hydraulique et dont les composants soient aisément adaptables à n'importe quel type de moteur et de suspension de groupe motopropulseur.

Dans ce but l'invention propose un dispositif hydroélastique destiné à être interposé entre deux ensembles à suspendre l'un par rapport à l'autre, notamment pour la suspension d'un moteur dans un véhicule automobile, du type comportant, agencées selon la direction générale de sollicitation du dispositif, une première armature, une masse en matériau élastomère reliée à la première armature, une chambre de travail délimitée au moins partiellement par la masse en matériau élastomère et par une cloison de séparation, une chambre d'expansion délimitée par la cloison de séparation et par une membrane souple, et une seconde armature reliée à la masse en matériau élastomère, lesdites chambres de travail et d'expansion étant remplies d'un liquide et étant reliées entre elles par un passage de communication, l'une de ces deux chambres étant délimitée au moins partiellement par rapport à l'extérieur par une portion déformable élastiquement à laquelle un organe de commande applique des déplacements, selon ladite direction générale de sollicitation, commandés de manière à créer dans ladite chambre des forces de pression synchrones avec les harmoniques des vibrations de l'un desdits deux ensembles, caractérisé en ce que ladite portion déformable élastiquement est une portion de paroi en matériau élastomère en forme de disque coaxial à ladite direction générale de sollicitation et munie sur sa face extérieure d'une plaque de renfort, et en ce que ledit organe de commande est un piston d'un actionneur hydraulique monté coulissant dans un corps d'actionneur fixé à l'une desdites armatures, le piston comportant une tige qui fait saillie hors du corps de l'actionneur et dont l'extrémité libre coopère avec ladite plaque de renfort.

Selon d'autres caractéristiques de l'invention :
- la chambre commandée est la chambre de travail du dispositif et la portion déformable élastiquement est une portion d'épaisseur réduite de la masse en matériau élastomère, l'armature sur laquelle est fixé le corps de l'actionneur est une plaque annulaire adhérisée à la masse en matériau élastomère, coaxiale à la direction de sollicitation du dispositif et dont le trou central est agencé en vis-à-vis d'un évidement formé dans la masse et dont le fond constitue la portion d'épaisseur réduite ;
- le corps de l'actionneur comporte une chambre hydraulique de commande qui reçoit le piston et des moyens de rappel élastique de ce dernier en position rétractée à l'intérieur de la chambre hydraulique de commande ;
- l'actionneur comporte des moyens pour permettre sa fixation à l'un des deux ensembles à suspendre, en position interposée entre cet ensemble et l'armature à laquelle est fixé le corps de l'actionneur ; et
- la source de fluide sous pression qui alimente la chambre hydraulique de commande est une pompe hydraulique entraînée par le moteur.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique illustrant le montage d'un groupe motopropulseur de véhicule automobile sur la caisse de ce dernier au moyen d'un dispositif de suspension réalisé conformément aux enseignements de l'invention ;

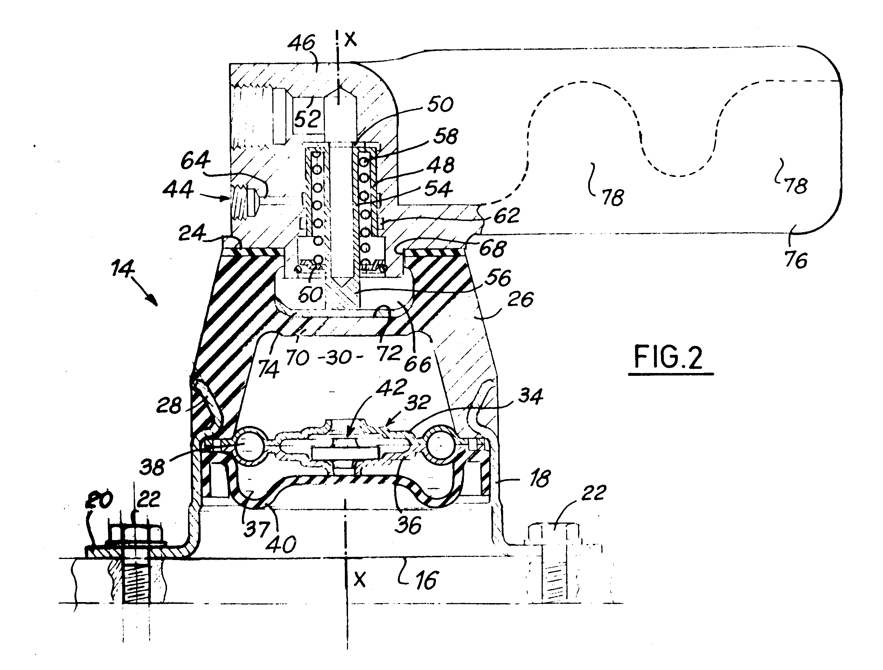

- la figure 2 est une vue en coupe axiale partielle du dispositif de suspension de la figure 1 ; et
- la figure 3 est une vue en coupe de la pompe d'alimentation de l'actionneur hydraulique du dispositif de suspension.

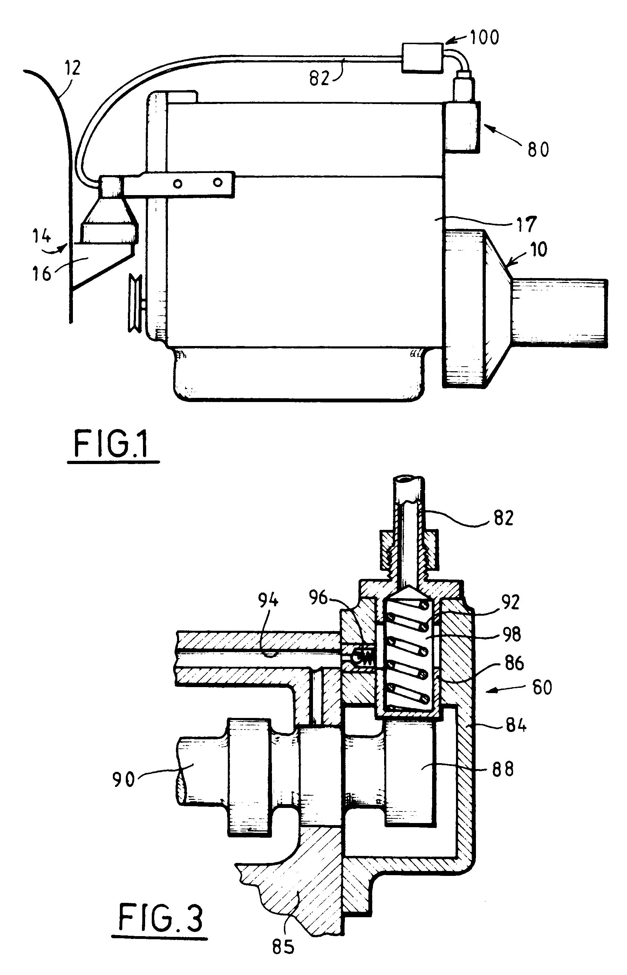

On reconnaît à la figure 1 un groupe motopropulseur 10 qui est monté sur la caisse 12 d'un véhicule automobile à l'aide d'au moins un dispositif de suspension hydroélastique 14 qui est interposé entre une patte 16 de la structure 12 et le bloc cylindre 17 du groupe motopropulseur 10.

Le dispositif de suspension 14 présente une forme générale de révolution autour d'un axe X-X.

Le dispositif comporte une première armature cylindrique 18 dont l'extrémité axiale en forme de bride 20 est fixée à la patte 16 de la caisse au moyen de vis 22.

La première armature 18 est reliée à une seconde armature 24 en forme de plaque annulaire par une masse en matériau élastomère 26 qui est adhérisée à la plaque 24 et à la portion conique d'extrémité axiale 28 de la première armature 18.

Le dispositif comporte une chambre de travail 30 qui est délimitée d'une part par la masse en matériau élastomère 26 et d'autre part par une cloison de séparation 32.

Selon un agencement connu et dans le mode de réalisation représenté à la figure, la cloison 32 est constituée par deux plaques métalliques complémentaires 34 et 36 formant un ensemble appelé "cassette". Les plaques 34 et 36 délimitent entre elles un conduit 38 qui met en communication la chambre de travail 30 avec une chambre d'expansion 37 qui est délimitée d'une part par la cloison 32 et d'autre part par une membrane 40 déformable élastiquement.

Selon une autre caractéristique connue, la cloison 32 peut également comporter un dispositif à clapet 42.

Conformément à l'invention, le dispositif 14 comporte également un organe de commande 44.

L'organe de commande 44 est un actionneur hydraulique constitué pour l'essentiel par un corps d'actionneur 46 et par un piston de commande 48.

Le corps de l'actionneur 46 est fixé sur la face supérieure de la plaque annulaire formant armature 24.

Le corps de l'actionneur 46 comporte une chambre hydraulique de commande 50 qui est alimentée en liquide sous pression par un conduit d'alimentation 52.

Le piston 48 comporte une tige de piston 54 dont l'extrémité libre 56 fait saillie hors du corps de l'actionneur 46 en direction de la masse en matériau élastomère 26 et est agencée coaxialement à la direction X-X.

Le piston 48 est rappelé élastiquement en position rétractée à l'intérieur de la chambre de commande hydraulique 50 par un ressort de rappel 58 qui prend appui d'une part à l'intérieur du piston et d'autre part sur une coupelle d'appui 60.

Le piston 48 est monté coulissant de manière étanche dans la chambre 50 au moyen d'un joint d'étanchéité 62. Le corps 46 de l'actionneur hydraulique 44 comporte également un conduit de retour de fuite 64.

Afin d'assurer un pilotage hydraulique du dispositif, la masse en matériau élastomère comporte un évidement 66 formé dans sa partie supérieure et qui s'étend en vis-à-vis du trou central 68 de la plaque annulaire 24 de façon à délimiter une portion 70 d'épaisseur réduite qui constitue une portion déformable élastiquement de commande de la variation de pression dans la chambre de travail 30.

La face supérieure 72 de la portion d'épaisseur 70 est renforcée par une plaque métallique 74 adhérisée à la portion 70 pour former un ensemble en forme de disque coaxial à la direction X-X sur lequel agit l'extrémité libre 56 du piston de commande.

Le corps 46 de l'actionneur se prolonge transversalement par rapport à l'axe X-X par une partie 76, venue de matière par moulage avec le corps 46, qui constitue une bride de fixation du dispositif 14 sur le bloc cylindre 17 par exemple au moyen de vis de fixation (non représentées) reçues dans des trous 78 de la partie 76.

L'alimentation en fluide sous pression du conduit d'alimentation 52 de l'actionneur 44 est effectuée au moyen d'une pompe d'alimentation 80 à laquelle il est relié par une canalisation 82 (voir figure 1).

En se reportant à la figure 3, on voit que la pompe 80 est constituée par un corps de pompe 84 rapporté sur la culasse 85 du groupe motopropulseur.

La pompe 80 comporte un piston 86 sur lequel agit une came de commande 88 formée à l'extrémité de l'arbre à cames 90 du moteur.

La rotation de la came 88 provoque des déplacements alternatifs du piston 86 qui produisent une pression de commmande dans la canalisation 82.

Le piston 86 est maintenu en appui contre la came 88 à l'aide d'un ressort hélicoïdal de compression 92.

La pompe 80 comporte une alimentation en huile sous pression en provenance du circuit de lubrification du moteur. Cette alimentation se fait par un passage 94 à travers un clapet anti-retour 96 à l'intérieur de la chambre de production de pression 98.

Le dispositif selon l'invention tel qu'il vient d'être décrit fonctionne de la manière suivante.

Le circuit hydraulique interne est mis à la pression du circuit de lubrification du moteur. Lorsque la came 88 provoque la levée du piston 86, la pression augmente instantanément dans le circuit jusqu'à une valeur déterminée par le tarage du ressort de rappel 58 du piston de commande 48 de l'actionneur hydraulique 44 et par la section efficace du piston 48.

Le liquide refoulé par la pompe 80 provoque le déplacement du piston 48 et donc le pilotage, ou commande, hydraulique du support 14 par action sur la chambre de travail 30 de la portion déformable élastiquement 70 qui se comporte comme un piston.

Lorsque le piston 86 de la pompe 80 commence à descendre, le ressort 58 qui agit sur le piston de commande 48 rappelle la colonne de liquide contenue dans la canalisation 82 de manière que les mouvements des deux pistons restent couplés dans les deux sens et ceci à haute fréquence.

La perte de fluide de commande pouvant résulter de fuites est compensée automatiquement par réalimentation à travers le clapet anti-retour 96.

Le circuit hydraulique peut également être équipé d'un dispositif de dégazage 100 (voir figure 1) agencé sur la canalisation 82 en position haute et qui permet d'évacuer des bulles de gaz éventuellement présentes dans le circuit.

La partie de structure connue du dispositif 14 fonctionne de la manière suivante.

Le groupe motopropulseur lié à l'armature supérieure 24 comprime la masse en matériau élastomère 26 qui se comporte comme un ressort. La compression de la masse 26 provoque un refoulement du liquide contenu dans la chambre de travail 30 à travers la cloison 32 en agissant sur les systèmes d'amortissement contenus dans la cloison 32. Le liquide ayant traversé la cloison 32 est transféré provisoirement dans la chambre d'expansion 37 dont le volume augmente du fait de la déformabilité de la membrane 40.

Lorsque la portion déformable 70 est attaquée par la tige 56 du piston 48 commandée par l'actionneur hydraulique 44, elle subit un déplacement selon la direction X-X qui provoque une réduction de volume de la chambre de travail 30.

Dans le domaine de fréquences visé par l'invention, les dispositifs d'amortissement conventionnels sont inopérants, de sorte que le fluide déplacé ne peut pas franchir la cloison 32. Il se produit donc un phénomène de gonflement périphérique de la paroi en forme de manchon de la masse en matériau élastomère et, par conséquent, une augmentation de la pression interne de la chambre 30 et donc de la raideur du dispositif.

Grâce à la modulation de la pression interne du dispositif hydroélastique qui est directement pilotée par l'actionneur hydraulique 44, il est possible de faire varier l'effort porteur du dispositif de suspension, de façon à conserver un effort d'appui constant sur l'armature 18 malgré le déplacement forcé du groupe motopropulseur.

On constate par ailleurs que les qualités d'origine du support hydroélastique sont conservées et qu'en particulier, il continue à se présenter sous la forme d'une unité complète, compacte, scellée et étanche.

## Revendications

1. Dispositif hydroélastique (14) destiné à être interposé entre deux ensembles (10,12) à suspendre l'un par rapport à l'autre, notamment pour la suspension d'un moteur (10) dans un véhicule automobile (12), du type comportant, agencées selon la direction générale (X-X) de sollicitation du dispositif, une première armature (18), une masse en matériau élastomère (26) reliée à la première armature, une chambre de travail (30) délimitée au moins partiellement par la masse en matériau élastomère et par une cloison de séparation (32), une chambre d'expansion (37) délimitée par la cloison de séparation (32) et par une membrane souple (40), et une seconde armature (24) reliée à la masse en matériau élastomère, lesdites chambres de travail et d'expansion étant remplies d'un liquide et étant reliées entre elles par un passage de communication (38), l'une (30) de ces deux chambres étant délimitée au moins partiellement par rapport à l'extérieur par une portion déformable élastiquement (70) à laquelle un organe de commande applique des déplacements, selon ladite direction générale de sollicitation, commandés de manière à créer dans ladite chambre des forces de pression synchrones avec les harmoniques des vibrations de l'un desdits deux ensembles, caractérisé en ce que ladite portion déformable élastiquement (70) est une portion de paroi en matériau élastomère en forme de disque coaxial à ladite direction générale de sollicitation (X-X) et munie sur sa face extérieure (72) d'une plaque de renfort (74), et en ce que ledit organe de commande est un piston (48-56) d'un actionneur hydraulique (44) monté coulissant dans un corps d'actionneur (46) fixé à l'une (24) desdites armatures, le piston (48) comportant une tige (54) qui fait saillie hors du corps de l'actionneur (46) et dont l'extrémité libre (56) coopère avec ladite plaque de renfort (74).

2. Dispositif de suspension selon la revendication 1, caractérisé en ce que ladite chambre est la chambre de travail (30) et en ce que ladite portion déformable élastiquement est une portion d'épaisseur réduite (70) de la masse en matériau élastomère (26).

3. Dispositif de suspension selon la revendication 2, caractérisé en ce que l'armature (24) sur laquelle est fixé le corps (46) de l'actionneur est une plaque annulaire adhérisée à la masse en matériau élastomère (26), coaxiale à ladite direction générale de sollicitation (X-X) et dont le trou central (68) est agencé en vis-à-vis d'un évidement (66) formé dans la masse en matériau élastomère et dont le fond constitue ladite portion d'épaisseur réduite (70).

4. Dispositif de suspension selon l'une quelconque des revendications précédentes, caractérisé en ce que le corps (46) de l'actionneur comporte une chambre hydraulique de commande (50) qui reçoit le piston (48) et des moyens (58,60) de rappel élastique du piston en position rétractée à l'intérieur de la chambre hydraulique de commande (50).

5. Dispositif de suspension selon l'une quelconque des revendications précédentes, caractérisé en ce que le corps (46) de l'actionneur comporte des moyens (76,78) pour permettre sa fixation à l'un desdits ensembles en position interposée entre cet ensemble et l'armature à laquelle il est fixé.

6. Dispositif selon l'une quelconque des revendications précédentes pour la suspension d'un moteur dans un véhicule automobile, caractérisé en ce qu'il comporte une pompe hydraulique (80) entraînée par le moteur qui fournit la pression hydraulique de commande de l'actionneur (44).

## Claims

1. Hydroelastic apparatus (14) adapted to be interposed between two assemblies (10,12) which are to be suspended relative to one another, especially for the suspension of an engine (10) in a motor vehicle (12), of the type comprising, arranged in the general direction (X-X) of stress on the apparatus, a first reinforcement (18), a mass of elastomeric material (26) attached to the first reinforcement, a working chamber (30) at least partially defined by the mass of elastomeric material and by a separating wall (32), an expansion chamber (37) defined by the separating wall (32) and by a flexible membrane (40), and a second reinforcement (24) connected to the mass of elastomeric material, said working and expansion chambers being filled with a liquid and connected to each other by a communication passage (38), one (30) of these two chambers being at least partially defined relative to the exterior by an elastically deformable portion (70) to which a control member applies displacements, in said general direction of stress, which are controlled so as to create in said chamber pressure forces which are synchronous with the harmonics of the vibrations of one of said two assemblies, characterised in that said elastically deformable portion (70) is a wall of elastomeric material in disc form coaxial with said general direction of stress (X-X) and provided on its outer surface (72) with a reinforcing plate (74), and in that said control member is a piston (48-56) of a hydraulic actuator (44) which is slidably mounted in an actuator body (46) fixed to one (24) of said reinforcements, the piston (48) having a rod (54) which projects from the actuator body (46) and the free end (56) of which cooperates with said reinforcing plate (74).

2. Suspension device according to claim 1, characterised in that said chamber is the working chamber (30) and in that said elastically deformable portion is a portion of reduced thickness (70) of the mass of elastomeric material (26).

3. Suspension devise according to claim 2, characterised in that the reinforcement (24) to which the body (46) of the actuator is fixed is an annular plate adhesively bonded to the mass of elastomeric material (26), coaxial with said general direction of stress (X-X), the central hole (68) of which is provided opposite a recess (66) formed in the mass of elastomeric material, the bottom of which constitutes said portion of reduced thickness (70).

4. Suspension device according to any one of the preceding claims, characterised in that the actuator body (46) comprises a hydraulic control chamber (50) which accommodates the piston (48) and means (58,60) for resiliently returning the piston to its retracted position inside the hydraulic control chamber (50).

5. Suspension device according to any one of the preceding claims, characterised in that the actuator body (46) comprises means (76,78) enabling it to be fixed to one of said assemblies in a position interposed between said assembly and the reinforcement to which it is fixed.

6. Device according to any one of the preceding claims for suspending an engine in a motor vehicle, characterised in that it comprises a hydraulic pump (80) driven by the engine which supplies the hydraulic pressure controlling the actuator (44).

## Patentansprüche

1. Hydroelastische Aufhängungsvorrichtung (14), welche dafür bestimmt ist, zwischen zwei gegeneinander aufzuhängenden Baugruppen (10, 12) insbesondere für die Aufhängung eines Motors (10) in einem Kraftfahrzeug angeordnet zu werden, von einer Konstruktionsart, welche in der allgemeinen Richtung (X-X) der Beanspruchung dieser Aufhängungsvorrichtung einen ersten Beschlag (18), eine an diesen ersten Beschlag angeschlossene Masse aus einem Elastomermaterial (26), eine mindestens teilweise durch diese Elastomermasse und durch eine Trennwand (32) abgegrenzte Arbeitskammer (30), sowie eine durch die Trennwand (32) und eine elastische Membrane (40) gebildete Expansionskammer (37), und einen zweiten an die Elastomermasse angeschlossenen Beschlag (24) aufweist, wobei diese Arbeitskammer und diese Expansionskammer mit einer Flüssigkeit befüllt und untereinander durch einen Verbindungskanal (38) verbunden sind, und eine (30) dieser beiden Kammern mindestens teilweise gegenüber der Außenseite durch einen elastisch verformbaren Teil (70) abgegrenzt wird, auf den ein Betätigungsorgan Verschiebungen in der allgemeinen Richtung der Beanspruchung beaufschlagt, die so gesteuert werden, daß sie in dieser Kammer Druckkräfte aufbauen, welche synchron mit den harmonischen Schwingungen der Vibrationen einer dieser Baugruppen verlaufen,
**dadurch gekennzeichnet, daß** dieser elastisch verformbare Teil (70) ein Wandteil aus einem elastomerischen Material in Form einer Scheibe ist, die sich koaxial zu dieser allgemeinen Richtung (X-X) der Beanspruchung erstreckt und an ihrer Außenseite (72) mit einer Verstärkungsplatte (74) versehen ist, und dadurch, daß das Steuerorgan ein Kolben (48, 56) einer hydraulischen Betätigung (44) ist, welcher gleitend in einem Betätigungskörper (46) gelagert ist, welcher an einem (24) dieser Beschläge befestigt ist und der Kolben (48) eine Stange (54) enthält, welche aus dem Betätigungskörper (46) herausragt und deren freies Ende (56) mit der Verstärkungsplatte (74) zusammenwirkt.

2. Hydroelastische Aufhängungsvorrichtung nach Anspruch 1,
**dadurch gekennzeichnet, daß** diese Kammer die Arbeitskammer (30) ist, und dadurch, daß der elastisch verformbare Teil ein Abschnitt mit reduzierter Wanddicke (70) der Elastomermasse (26) ist.

3. Hydroelastische Aufhängungsvorrichtung nach Anspruch 2,
**dadurch gekennzeichnet, daß** der Beschlag (24), an dem der Körper (46) der Betätigung befestigt ist, eine ringförmige Platte ist, welche an der Elastomermasse (26) haftet und sich koaxial zu der allgemeinen Richtung der Beanspruchung (X-X) erstreckt und deren zentrale Bohrung (68) gegenüber einer Aussparung (66) angeordnet ist, welche in der Elastomermasse ausgebildet ist und deren Boden den Teil mit reduzierter Wandstärke (70) bildet.

4. Hydroelastische Aufhängungsvorrichtung nach einem der vorstehenden Ansprüche,
**dadurch gekennzeichnet, daß** der Körper (46) der Betätigung eine hydraulische Steuerkammer (50) enthält, welche den Kolben (48) und elastische Mittel (58, 60) für den Rückzug des Kolbens in seine eingezogenen Stellung innerhalb der hydraulischen Steuerkammer (50) aufnimmt.

5. Hydroelastische Aufhängungsvorrichtung nach einem der vorstehenden Ansprüche,
**dadurch gekennzeichnet, daß** der Körper (46) der Betätigung Mittel (76, 78) aufweist, die ihre Befestigung an einer der Baugruppen in einer Stellung zwischen dieser Baugruppe und dem Beschlag ermöglicht, an dem sie befestigt ist.

6. Hydroelastische Aufhängungsvorrichtung nach einem der vorstehenden Ansprüche für die Aufhängung eines Motors in einem Kraftfahrzeug,
**dadurch gekennzeichnet, daß** sie eine durch den Motor angetriebene hydraulische Pumpe (80) enthält, welche den hydraulischen Steuerdruck der Betätigung (44) liefert.
